(19) Europäisches Patentamt
European Patent Office
Office européen des brevets

(11) Veröffentlichungsnummer: **0 355 614**
**A2**

(12) # EUROPÄISCHE PATENTANMELDUNG

(21) Anmeldenummer: **89114874.4**

(22) Anmeldetag: **11.08.89**

(51) Int. Cl.[4]: **C08L 69/00 , C08L 67/02 , //(C08L69/00,67:02,51:04), (C08L67/02,69:00,51:04)**

(30) Priorität: **24.08.88 DE 3828690**

(43) Veröffentlichungstag der Anmeldung: **28.02.90 Patentblatt 90/09**

(84) Benannte Vertragsstaaten: **DE ES FR GB IT**

(71) Anmelder: **BAYER AG**
**D-5090 Leverkusen 1 Bayerwerk(DE)**

(72) Erfinder: **Eckel, Thomas, Dr.**
**Gneisenaustrasse 15 a**
**D-4047 Dormagen 1(DE)**
Erfinder: **Wittmann, Dieter, Dr.**
**Wolfskaul 4**
**D-5000 Koeln 80(DE)**
Erfinder: **Schoeps, Jochen, Dr.**
**Windmuehlenstrasse 126**
**D-4150 Krefeld 1(DE)**
Erfinder: **Peters, Horst, Dr.**
**Winterberg 25**
**D-5090 Leverkusen 3(DE)**
Erfinder: **Ott, Karl-Heinz, Dr.**
**Paul-Klee-Strasse 54**
**D-5090 Leverkusen 1(DE)**

(54) **Schlagzähe thermoplastische Formmassen aus aromatischen Polyestercarbonaten und Polyalkylenterephthalaten.**

(57) Thermoplastische Formmassen auf Basis von vollaromatischen Polyestercarbonaten, Polyalkylenterephthalaten und gepfropftem Dienkautschuk besitzen eine ausgewogene Eigenschaftskombination aus hoher Raumtemperatur- und Tieftemperaturkerbschlagzähigkeit sowie hoher Fließnahtfestigkeit und lassen sich zur Herstellung von Formkörpern, vornehmlich durch Spritzguß, verwenden.

EP 0 355 614 A2

## Schlagzähe thermoplastische Formmassen aus aromatischen Polyestercarbonaten und Polyalkylenterephthalaten

Die Erfindung betrifft thermoplastische Formmassen auf Basis von vollaromatischen Polyestercarbonaten, Polyalkylenterephthalaten und gepfropftem Dienkautschuk, ein Verfahren zu ihrer Herstellung durch Mischen der Kompnenten bei erhöhter Temperatur und ihre Verwendung zur Herstellung von Formkörpern vornehmlich durch Spritzguß.

Schlagzähe Mischungen aus aromatischen Polyestercarbonaten und Polyalkylenterephthalaten sind bekannt.

Gemäß EP 0 137 230 verbessert die Zugabe von Schlagzähmodifikatoren die Zähigkeiten von Mischungen aus aromatischen Polyestercarbonaten und Polyalkylenterephthalaten.

In EP 0 135 779 werden Blends aus Polyestercarbonaten und Polyalkylenterephthalaten beschrieben, die durch Pfropfpolymerisate auf Butadienbasis mit mehrstufigem Aufbau schlagzäh modifiziert werden. Dieser Modifikator besitzt eine Grundlage aus Butadien und Styrol, eine Zwischenphase aus Styrol sowie eine Pfropfhülle aus Methylmethacrylat und Butandiolmethacrylat. Dabei ist der Einbau eines Vernetzers in die Pfropfhülle wesentlich für das Erreichen des Eigenschaftsniveaus. Der aliphatisch/aromatische Polyester kann Polyethylenterepthalat und/oder Polycyclohexandimethanolterephthalat sein.

EP 0 155 989 beschreibt Mischungen aus Polyestercarbonaten und Polyalkylenterephthalaten, die durch Pfropfpolymerisate von Methylmetharylat auf Acrylatkautschuk schlagzäh modifiziert sind.

Gemäß US 4 677 150 ist ein Pfropfpolymerisat, bestehend aus einer Acrylat- oder Butadiengrundlage sowie einer Hülle aus Styrol und Methylmethacrylat zur Verbesserung der Schlagzähigkeit von Polyestercarbonat/Polyalkylenterephthalat-Mischungen geeignet.

In EP 0 237 872 werden allgemein Dien-, Acrylat- oder EPDM-Kautschuke zur Modifizierung von Polyestercarbonat/Polyethylenterephthalat-Blends vorgeschlagen. Die beanspruchten Polyestercarbonate besitzen einen Esteranteil von 65 bis 95 %, der zu 80 bis 98 Mol-% aus Isophthalsäure- und 20 bis 2 Mol-% aus Terephthalsäure-Einheiten besteht.

Für viele Anwendungsbereiche solcher Formmassen, insbesondere im Kfz-Sektor, ist neben einer hohen Kerbschlagzähigkeit sowohl bei Raumtemperatur als auch bei tiefen Temperaturen und einer guten Verarbeitbarkeit auch ein ausreichendes Niveau der Zusammenfließnahtfestigkeit notwendig. Dieses ist erforderlich, um auch größere Spritzgußteile mit mehreren Angußstellen in ausreichender Qualität zu erhalten.

Zwar läßt sich mit Kautschukmodifikatoren auf der Basis von Butadienkautschuken, wie in US 4 677 150 und EP 0 135 779 beschrieben, ein für viele Anwendung ausreichendes Niveau der Raumtemperatur- und Kältezähigkeit bei Formmassen aus aromatischem Polyestercarbonat und Polyalkylenterephthalat erzielen; bei größeren Spritzgußteilen zeigen sich jedoch nachteilige mechanische Eigenschaften wegen zu geringer Fließnahtfestigkeiten, die beispielsweise durch eine vernetzte Pfropfhülle bedingt sind. Durch den Einsatz von Methylmethacrylatgepfropften Acrylatkautschuken (EP 0 155 989) in Blends aus aromatischem Polyestercarbonat und Polyalkylenterephthalat werden zwar die Fließnahtfestigkeiten der Formteile verbessert, jedoch nur auf Kosten einer beträchtlich reduzierten Tieftemperaturzähigkeit.

Überraschenderweise wurde nun gefunden, daß sich Mischungen aus vollaromatischen Polyestercarbonaten, Polyalkylenterephthalaten und gepfropften Dienkautschuken zu Formmassen mit einer Eigenschaftskombination aus hoher Raumtemperatur- und Tieftemperaturkerbschlag zähigkeit sowie hoher Fließnahtfestigkeit verarbeiten lassen, wenn man speziell gepfropfte, teilchenförmige Dienkautschuke einsetzt. Die erfindungsgemäßen Dienpfropfkautschuke besitzen eine spezielle Pfropfhülle, die zum überwiegenden Teil aus Methylmethacrylat und kleineren Anteilen mindestens eines Acrylsäureesters eines primären oder sekundären einwertigen aliphatischen Alkohols oder des tert.-Butanol bestehen. Die erfindungsgemäße Eigenschaftskombination bleibt auch dann erhalten, wenn ein Teil des aromatischen Polyestercarbonats durch Polycarbonat ersetzt wird.

Gegenstand der vorliegenden Erfindung sind thermoplastische Formmassen enthaltend

A. 5 bis 99 Gew.-Tl., vorzugsweise 10 bis 95 Gew.-Tl., besonders bevorzugt 50 bis 90 Gew.-Tl. eines vollaromatischen Polyestercarbonats,

B. 1 bis 95 Gew.-Tl., vorzugsweise 5 bis 90 Gew.-Tl., besonders bevorzugt 10 bis 50 Gew.-Tl. eines oder mehrerer thermoplastischer Polyalkylenterephthalate und

C. 1 bis 60, vorzugsweise 2 bis 50, insbesondere 3 bis 40 Gew.-Tl. eines Pfropfpolymerisats von

C.1 5 bis 90, vorzugsweise 10 bis 70, insbesondere 15 bis 50 Gew.-Tl. einer Mischung aus

C.1.1 20 bis 99, vorzugsweise 50 bis 97, insbesondere 70 bis 95 Gew.-Tl. Methylmethacrylat und

C.1.2 1 bis 40, vorzugsweise 1 bis 20 Gew.-Tl. Acrylsäureester eines primären oder sekundären einwerti-

gen aliphatischen $C_2$-$C_{10}$-Alkohols und gegebenenfalls

C.1.3 0,1 bis 10, vorzugsweise 0,5 bis 4 Gew.-Tl. Acryl- oder Methacrylsäureester des tert.-Butanols und/oder

C.1.4 0,1 bis 30, vorzugsweise 0,5 bis 20 Gew.-Tl. einer Mischung aus 50 bis 95 Gew.-Tl. Styrol, $\alpha$-Methylstyrol, $C_1$-$C_4$-Alkyl- oder Halogenkern-substituentem Styrol oder Mischungen daraus und 5 bis 50 Gew.-Tl. Acrylnitril, Methacrylnitril, Maleinsäureanhydrid, $C_1$-$C_4$-Alkyl- oder Phenyl-N-substituiertem Maleinimid oder Mischungen daraus, wobei die Summe der Gewichtsteile aus C.1.1 und C.1.2 sowie gegebenenfalls C.1.3 und/oder C.1.4 100 Gew.-Tl. betragen soll, auf

C.2 10 bis 95, vorzugsweise 30 bis 90, insbesondere 50 bis 85 Gew.-Tl. eines vernetzten Dienkautschuks mit einem mittleren Teilchendurchmesser $d_{50}$ von 0,05 bis 1, vorzugsweise 0,05 bis 0,8 $\mu$m und insbesondere von 0,05 bis 0,6 $\mu$m und einem Gelgehalt von mehr als 50, vorzugsweise mehr als 70, insbesondere 73 bis 98 Gew.-%, bezogen auf das Gewicht von C.2, wobei die Summe der Gew.-Tl. aus A, B und C 100 Gew.-Tl. betragen soll.

Komponente A

Vollaromatische Polyestercarbonate A im Sinne der Erfindung sind überwiegend bis ausschließlich aus aromatischen $C_8$-$C_{14}$-Dicarbonsäuren, $C_6$-$C_{30}$-Diphenolen und Kohlensäurederivaten, z.B. Phosgen, aufgebaut.

Bevorzugte aromatische Dicarbonsäuren sind beispielsweise: Isophthalsäure, Terephthalsäure, Diphenylether-4,4′-dicarbonsäure, Naphthalin-2,6-dicarbonsäure sowie beliebige Mischungen dieser Säuren. Besonders bevorzugt sind Iso- und Terephthalsäure. Bevorzugtes Kohlensäurederivat ist Phosgen.

Bevorzugte Diphenole für die Herstellung der vollaromatischen Polyestercarbonate A sind Verbindungen der Formel I

HO - Z - OH (I),

worin

Z einen zweiwertigen ein- oder mehrkernigen aromatischen Rest mit 6 bis 30 C-Atomen bedeutet; wobei Z derart gebaut ist, daß die beiden OH-Gruppen direkt an je ein C-Atom eines aromatischen Systems gebunden sind.

Besonders bevorzugte Diphenole sind Verbindungen der Formel II

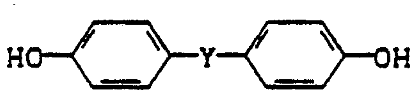

(II),

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-,

$-\underset{\underset{O}{\|}}{S}-$, $-SO_2$ oder $-\underset{\underset{O}{\|}}{C}-$

bedeutet sowie deren kernalkylierte und kernhalogenierte Derivate, z.B.:

Hydrochinon

Resorcin,

Dihydroxydiphenyle,

Bis-(hydroxyphenyl)-alkane,

Bis-(hydroxyphenyl)-cycloalkane,

Bis-(hydroxyphenyl)-ether,

Bis-(hydroxyphenyl)-ketone,

Bis-(hydroxyphenyl)-sulfoxide,

Bis-(hydroxyphenyl)-sulfone und

$\alpha'\alpha$-Bis-(hydroxyphenyl)-diisopropylbenzole,

sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxphenyl)-cyclohexan, 4,4′-Dihydroxydiphenylsulfid, 4,4′-Dihydroxydiphenylsulfon sowie deren di- und tetrahalognierte Derivate. Besonders bevorzugt ist Bisphenol A. Es können auch beliebige Mischungen der genannten Diphenole verwendet werden.

Mögliche Verzweigungsmittel sind in den DE-OS 2 940 024 und 3 007 934 genannt.

Als Kettenabbrecher für die vollaromatischen Polyestercarbonate A werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säurechloride) verwendet. Weiterhin kommen die Chloride von aliphatischen Monocarbonsäuren mit bis zu 22 C-Atomen in Betracht.

Am Aufbau der vollaromatischen Polyestercarbonate A können auch bis jeweils 30 Mol-%, bevorzugt 0 bis 20 Mol-%, der Dicarbonsäuren und Dihydroxyverbindungen durch aliphatische Baugruppen, z.B. Adipinsäure, Butandiol-1,4, ersetzt sein.

Weiterhin können die vollaromatischen Polyestercarbonate A teilweise aus aromatischen Hydroxycarbonsäuren, wie p-Hydroxy-benzoesäure, aufgebaut sein. Der Anteil solcher Hydroxycarbonsäuren kann bis zu 100 Mol-%, bevorzugt 30 bis 50 Mol-%, (bezogen auf Bisphenol) betragen.

Falls Iso- und Terephthalsäure gemeinsam am Aufbau der vollaromatischen Polyestercarbonate A beteiligt sind, kann der Terephthalsäureanteil 1 bis 99 %, bevorzugt 25 bis 75 % des Gesamtesteranteiles betragen.

Die vollaromatischen Polyestercarbonate können 1 bis 99 Mol-%, insbesondere 30 bis 80 Mol-%, Estergruppen, bezogen auf die Summe von Ester-und Carbonatgruppen, enthalten.

Sowohl der Ester- als auch der Carbonatanteil der vollaromatischen Polyestercarbonate A kann in Form von Blöcken oder statistisch verteilt im Polykondensat vorliegen.

Die Herstellung der vollaromatischen Polyestercarbonate A ist bekannt und z.B. in den DE-OS 1 495 626, 2 232 877, 2 703 376, 3 000 610, 2 714 544, 2 940 024, 3 007 934 oder US 3 169 121 beschrieben. Besonders bevorzugt ist das Phasengrenzflächenverfahren.

Die relative Lösungsviskosität ($\eta_{rel}$) der vollaromatischen Polyestercarbonate A liegt im Bereich von 1,18 bis 1,4, vorzugsweise 1,22 bis 1,3 (gemessen an Lösungen von 0,5 g Polyestercarbonat A in 100 ml $CH_2Cl_2$-Lösung bei 25 °C).

Ein gewünschter Carbonatgruppengehalt kann auch durch Mischen von vollaromatischem Polyestercarbonat mit aromatischem Polycarbonat eingestellt werden. Das bedeutet, daß eine erfindungsgemäße Komponente A auch dann vorliegt, wenn das vollaromatische Polyestercarbonat teilweise, d.h. zu 5 bis 95 Gew.-%, bevorzugt 10 bis 50 Gew.-%, durch ein aromatisches Polycarbonat ersetzt wird.

Als aromatische Polycarbonate können Homopolycarbonate und Copolycarbonate eingesetzt werden. Diese sind z.B. in US 2 999 835, GP-PS 772 627 und DE-OS 3 334 872 beschrieben.

## Komponente B

Polyalkylenterephthalate gemäß Komponente B im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen dieser Reaktionsprodukte.

Bevorzugte Polyalkylenterephthalate gemäß Komponente B lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate gemäß Komponente B enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol- und/oder Butandiol-1,4-Reste.

Die bevorzugten Polyalkylenterephthalate B können neben Terephthalsäureresten 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonäsure, 4,4'-Diphenyldicarbon säure, Bernstein-, Adipin-, Sebacin-, Azelain- oder Cyclohexandiessigsäure.

Die bevorzugten Polyalkylenterephthalate B können neben Ethylenglykol- bzw. Butandiol-1,4-Resten 0 bis 20 Mol-% anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(ß-hydroxyethoxy)-benzol, 2,2-Bis-4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate gemäß Komponente B können durch Einbau relativ kleiner Mengen 3- oder 4-wertiger Alkohole oder 3- oder 4 basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate B, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterphthalate B sind auch Copolyester, die aus mindestens zwei der obengenannten Alkoholkomponenten hergestellt sind; besonders bevorzugte Copolyester sind Poly-(ethylenglykol/butandiol-1,4)-terephthalate.

Die als Komponente B vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25° C.

Komponente C

Bevorzugte Pfropfpolymerisate C sind solche, die man durch Pfropfpolymerisation von 5 bis 90 Gew.-Tl., vorzugsweise von 10 bis 70 Gew.-Tl., insbesondere 15 bis 50 Gew.-Tl., wenigstens eines Vinylmonomerengemisches aus Methylmethacrylat und einem Acrylsäureester eines primären oder sekundären einwertigen aliphatischen $C_2$-$C_{10}$-Alkohols, wie n-Butylacrylat, auf 10 bis 95, vorzugsweise 30 bis 90, insbesondere 50 bis 85 Gew.-Tl. eines teilchenförmigen, vernetzten, Dienkautschuks, erhält.

Zusätzlich können als Pfropfmonomere noch 0,1 bis 10 Gew.-Tl. des Acryl- oder Methacrylsäureesters des tertiären Butanols und/oder 0,1 bis 30 Gew.-Tl. einer Mischung aus Styrol oder α-Methylstyrol und Acrylnitril, Methacrylnitril oder Maleinsäureanyhdrid auf die Kautschukgrundlage aufgepfropft werden.

Besonders bevorzugte Pfropfmonomere sind Mischungen von Methylmethacrylat und n-Butylacrylat im Mengenverhältnis von 85:15 bis 98:2 sowie Mischungen davon mit tert.-Butylacrylat und/oder mit Styrol und Acrylnitril (Verhältnis: 72 bis 28).

Bevorzugte Dienkautschuke C.2 sind vernetzte Homo- und/oder Copolymerisate aus konjugierten $C_4$-$C_6$-Dienen. Bevorzugtes Dien ist Butadien-1,3. Die Diencopolymerisate können neben den Dienresten bis zu 20 Gew.-%, bezogen auf Diencopolymerisat, Reste anderer ethylenisch ungesättigter Monomerer, wie Styrol, Acrylnitril, Ester der Acryl- oder Methacrylsäure mit einwertigen $C_1$-$C_4$-Alkoholen, wie Methylacrylat, Ethylacrylat, Methylmethacrylat und Ethylmethacrylat, einpolymerisiert enthalten.

Die Herstellung der Dienkautschuk-Pfropfgrundlage C.2 und der daraus hergestellten Pfropfpolymerisate C wird z.B. in "Methoden der Organischen Chemie" (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie, Weinheim, 1981, S. 279-284, beschrieben.

Bei der Herstellung der Pfropfpolymerisate C durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisat C im Sinne der Erfindung ist deshalb das durch Polymerisation von Pfropfmonomeren C.1 in Gegenwart des Dienkautschuks C.2 erhaltene Produkt.

Die erfindungsgemäßen Formmassen weisen optimale Eigenschaften auf, wenn die Mengen an freiem (Co)Polymerisat im Pfropfpolymerisat C 15 Gew.-%, vorzugsweise 10 Gew.-%, insbesondere 7 Gew.-%, bezogen auf C, nicht übersteigt.

Der Staudinger-Index dieser freien (Co)Polymerisate soll weniger als 0,6 dl/g, vorzugsweise weniger als 0,4 dl/g betragen, gemessen in Dimethylformamid bei 25° C.

Der mittlere Teilchendurchmesser $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid, Z. und Z. Polymere 250 (1972), 782-796) oder mittels Elektronenmikroskopie und anschließender Teil chenauszählung (G. Kämpf, H. Schuster, Angew. makromolekulare Chemie, 14, (1970), 111-129) oder mittels Lichtstreuungsmessungen.

Die Gelgehalte der vernetzten Dienkautschuke werden bestimmt bei 25° C in Toluol (M. Hoffmann, H. Krämer, R. Kuhn, Polymeranalytik I und II, Georg Thieme Verlag, Stuttgart 1977).

Als Radikalbildner können anorganische oder organische Peroxide oder Hydroperoxide, z.B. Verbindungen des Typs $R_1OOR_2$ eingesetzt werden ($R_1$ = $R_2$ = Alkyl, Aryl, Acyl, Wasserstoff; $R_1$ = Alkyl, Acryl, Acyl; $R_2$ = Wasserstoff). Die Gesamtzahl der Kohlenstoffatome in den Resten $R_1$ und $R_2$ ist ≦ 30, bevorzugt ≦ 25. Beispiele sind Peroxide oder Hydroperoxide wie Dibenzoylperoxid, tert.-Butylhydroperoxid, Cumolhydroperoxid, Laurylperoxid, 2,5-Di-tert,-butyl-2,5-dimethylhexyl-peroxid, Di-tert.-butyl-peroxid oder Di-cumylperoxid.

Des weiteren sind anorganische Verbindungen mit einer O-O-Gruppierung, wie Peroxide, Per-Verbindungen von Säuren des Schwefels, z.B. Persulfate, oder auch Perborate als Radikalbildner geeignet. Bevorzugt werden Persulfate, z.B. $K_2S_2O_8$. Beispiele sind $(NH_4)_2S_2O_8$, $Na_2S_2O_8$, $Na_2O_2$, $NaBO_3 \cdot 4H_2O$, $Na_2B_4O_8 \cdot 10H_2O$.

Ein ganz besonders bevorzugter Mengenbereich an Peroxid/Hydroperoxid-Verbindungen liegt bei 0,05 bis 0,30 Gew.-%.

Die so hergestellten Pfropfpolymerisate C können nach bekannten Verfahren aufgearbeitet werden, z.B. durch Koagulation der Latices mit Elektrolyten (Salzen, Säuren oder Gemischen davon) und anschließende Reinigung und Trocknung.

Die erfindungsgemäßen Formmassen können weiter für aromatische Polyestercarbonate, Polyalkylenterphthalate sowie für Pfropfpolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung von thermoplastischen Formmassen enthaltend die Komponente A, B und C sowie gegebenenfalls Stabilisatoren, Pigmente, Entformungsmittel, Flammschutzmittel und/oder Antistatika, das dadurch gekennzeichnet ist, daß man die Komponente A, B und C sowie gegebenenfalls Stabilisatoren, Pigmente, Entformungsmittel, Flammschutzmittel und/oder Antistatika in bekannter Weise vermischt und bei erhöhten Temperaturen, vorzugsweise bei Temperaturen von 200 bis 350 °C, in üblichen Vorrichtungen, wie Innenknetern, Extrudern oder Doppelschnecken, schmelzcompoundiert oder schmelzextrudiert.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewerbe, Automobilteile. Sie werden außerdem für elektrische Geräte, z.B. für Steckerleisten, Spulenkörper und Leiterplatten, eingesetzt.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Angegebene Teile bedeuten Gew.-Tl.

### Komponente A

A 1

Polyestercarbonat mit einem Esteranteil von 50 Mol-% auf Basis von Bisphenol-A, Iso- und Terephthalsäure (1:1) mit 3 Mol-%, bezogen auf Bisphenol A-Einheiten, p-Isooctylphenyl-Endgruppen mit einer relativen Viskosität $\eta_{rel}$ von 1,30 (gemessen an einer Lösung von 0,5 g Polyestercarbonat in 100 ml $CH_2Cl_2$ bei 25 °C).

A 2

Lineares Polycarbonat auf Basis Bisphenol A mit einer relativen Lösungsviskosität $\eta_{rel}$ 1,26 bis 1,28,

gemessen in $CH_2Cl_2$ bei 25 °C und in einer Konzentration von 0,5 g/100 ml).

Komponente B

Lineares Polyethylenterephthalat mit einer Intrinsic-Viskosität I.V. = 0,85 dl/g, gemessen in Phenol/o-Dichlorbenzol (1:1) bei 25 °C, und einer Konzentration von 0,5 g/dl, erhältlich von der Firma ICI unter dem Handelsnamen Melinar B 90 S.

Komponente C

C 1 (Vergleich)

Pfropfpolymerisat von 50 Gew.-Tl. eines Copolymerisats aus Styrol und Acrylnitril im Verhältnis 72:28 auf 50 Gew.-Tl. teilchenförmigen,vernetzten Polybutadienkautschuks (mittlerer Teilchendurchmesser $d_{50}$ = 0,4 µm), hergestellt durch Emulsionspolymerisation.

C 2 (Vergleich)

Pfropfpolymerisat, hergestellt aus 80 Gew.-% Pfropfgrundlage aus vernetztem Polybutylacrylatkautschuk (Vernetzer: Butylendiacrylat und Allylmethacrylat) und 20 Gew.-% einer Pfropfauflage aus Methylmethacrylat erhältlich von der Firma Rohm & Haas unter dem Handelsnamen Acryloid KM 330.

C 3 (erfindungsgemäß)

Pfropfpolymerisat, hergestellt durch Emulsionspolymerisation aus 80 Gew.-% Pfropfgrundlage aus vernetztem Polybutadien (Gelgehalt 85 Gew.-%, gemessen in Toluol) und 20 Gew.-% einer Pfropfauflage aus Methylmethacrylat und n-Butylacrylat im Verhältnis 9:1 mit einem mittleren Teilchendurchmesser $d_{50}$ = 0,4 µm.

Herstellung und Prüfung der erfindungsgemäßen Formmassen

Die Komponenten A, B und C wurden auf einem 3 l Innenkneter bei Temperaturen zwischen 200 und 280 °C aufgeschmolzen und homogenisiert.

Von den Formmassen wurden auf einer Spritzgußmaschine Stäbe der Abmessung 80 x 10 x 4 $mm^3$ (Verarbeitungstemperatur: 260 °C) hergestellt, an denen die Kerbschlagzähigkeit (nach Methode ISO 180) bei Raumtemperatur, 0 °C, -10 °C, -20 °C und -40 °C gemessen wurde. Daraus wurde der Zäh-Spröd-Übergang bestimmt, d.h. jener Temperaturbereich, in dem die ersten Sprödbrüche auftreten.

Zur Ermittlung der Fließnahtfestigkeit wurde die Schlagzähigkeit nach DIN 53 453 (Charpy-Methode) an der Bindenaht von beidseitig angespritzten Prüfkörpern (Verarbeitungstemperatur: 260 °C) der Dimension 170 x 10 x 4 $mm^3$ herangezogen.

Die erfindungsgemäße Formmasse aus vollaromatischem Polyestercarbonat, Polyalkylenterephthalat und Pfropfpolymerisat (Beispiel 3) zeigt gegenüber den Vergleichsversuchen (Beispiele 1, 2) bei gleichem Kautschukgehalt eine wesentlich größere Fließnahtfestigkeit und eine höhere Kerbschlagzähigkeit bei tiefen Temperaturen. Auch der Zäh/Spröd-Übergang ist auf gleichem Niveau bzw. nach tiefen Temperaturen verschoben, d.h. die erfindungsgemäßen Formmassen zeigen bei tiefen Temperaturen noch ein zähes Bruchverhalten.

Das günstige Eigenschaftsniveau der erfindungsgemäßen Formmassen bleibt auch dann noch voll erhalten oder verbessert sich sogar, wenn Polyethylenterephthalate oder Pfropfpolymerisate in anderen Anteilen eingesetzt werden (Beispiele 4, 5, 7, 8, 9, 10) oder wenn ein Teil des vollaromatischen Polyestercarbonats durch Polycarbonat ersetzt wird (Beispiele 6, 7).

Tabelle

| Zusammensetzung und Eigenschaften der Formmassen | | | | | | | | | |
|---|---|---|---|---|---|---|---|---|---|
| Beispiel | **Zusammensetzung** | | | | | | Fließnahtfestigkeit an F kJ/m² | Kerbschlagzähigkeit $a_k$ bei - 10° C kJ/m² | Zäh/Spröd-Übergang °C |
| | A 1 | A 2 | B Gew.-% | C 1 | C 2 | C 3 | | | |
| 1 (Vergleich) | 68 | - | 17 | 15 | - | - | 7,3 | 36,3 | -20 / -30 |
| 2 (Vergleich) | 72 | - | 18 | - | 10 | - | 8,0 | 26,2 | -10 |
| 3 | 72 | - | 18 | - | - | 10 | 16,3 | 46,3 | -20 / -30 |
| 4 | 75 | - | 15 | - | - | 10 | 14,0 | 42,5 | -30 |
| 5 | 70 | - | 20 | - | - | 10 | 12,7 | 45,0 | -20 / -30 |
| 6 | 46,6 | 23,3 | 20 | - | - | 10 | 19,8 | 46,4 | -40 |
| 7 | 35 | 35 | 20 | - | - | 10 | 17,7 | 47,1 | -40 |
| 8 | 65 | - | 20 | - | - | 15 | 16,4 | 35,6 | -40 |
| 9 | 68 | - | 17 | - | - | 15 | 12,0 | 42,0 | -30 / -40 |
| 10 | 75 | - | 10 | - | - | 15 | 28,1 | 45,2 | -40 / -50 |

## Ansprüche

1. Thermoplastische Formmassen enthaltend
A. 5 bis 99 Gew.-Tl. eines vollaromatischen Polyestercarbonats,
B. 1 bis 95 Gew.-Tl. eines oder mehrerer thermoplastischer Polyalkylenterephthalate und
C. 1 bis 60 Gew.-Tl. eines Pfropfpolymerisats von
C.1 5 bis 90 Gew.-Tl. einer Mischung aus
C.1.1 20 bis 99 Gew.-Tl. Methylmethacrylat und
C.1.2 1 bis 40 Gew.-Tl. Acrylsäureester eines primären oder sekundären einwertigen aliphatischen $C_2$-$C_{10}$-Alkohols und gegebenenfalls
C.1.3 0,1 bis 10 Gew.-Tl. Acryl- oder Methacrylsäureester des tert.-Butanols und/oder
C.1.4 0,1 bis 30 Gew.-Tl. einer Mischung aus 50 bis 95 Gew.-Tl. Styrol, α-Methylstyrol, $C_1$-$C_4$-Alkyl- oder Halogenkern-substituiertem Styrol oder Mischungen daraus und 5 bis 50 Gew.-Tl. Acrylnitril, Methacrylnitril, Maleinsäureanhydrid, $C_1$-$C_4$-Alkyl- oder Phenyl-N-substituiertem Maleinimid oder Mischungen daraus, wobei die Summe der Gewichtsanteile aus C.1.1 und C.1.2 sowie gegebenenfalls C.1.3 und/oder C.1.4 100 Gew.-Tl. betragen soll, auf
C.2 10 bis 95 Gew.-Tl. eines vernetzten Dienkautschuks mit einem mittleren Teilchendurchmesser $d_{50}$ von 0,05 bis 1 µm und einem Gelgehalt von mehr als 50 Gew.-%, bezogen auf das Gewicht an C.2,
wobei die Summe der Gew.-Tl. aus A, B und C 100 Gew.-Tl. betragen soll.

2. Formmassen gemäß Anspruch 1, dadurch gekennzeichnet, daß sie 10 bis 95 Gew.-Tl. an Komponente A, 5 bis 90 Gew.-Tl. an Komponente B und 2 bis 50 Gew.-Tl. an Komponente C enthalten.

3. Formmassen gemäß Ansprüchen 1 und 2, dadurch gekennzeichnet, daß das Pfropfpolymerisat C aus 10 bis 70 Gew.-Tl. Pfropfmonomeren C.1 und 30 bis 90 Gew.-Tl. Dienkautschuk C. 2 hergestellt ist.

4. Formmassen gemäß Ansprüchen 1 bis 3, dadurch gekennzeichnet, daß die Komponente C.1 aus 50 bis 97 Gew.-Tl. C.1.1 und 1 bis 20 Gew.-Tl. C.1.2 besteht.

5., Formmassen gemäß Ansprüchen 1 bis 4, dadurch gekennzeichnet, daß die Teilchendurchmesser der Dienkautschuke C.2 0,05 bis 0,8 µm betragen.

6. Formmassen gemäß Ansprüchen 1 bis 5, dadurch gekennzeichnet, daß der Gelgehalt des Dienkautschuks C.2 mehr als 70 Gew.-%, bezogen auf C.2, beträgt.

7. Formmassen gemäß Ansprüchen 1 bis 6, dadurch gekennzeichnet, daß sie zusätzlich mindestens einen Zusatz ausgewählt aus der Gruppe der Stabilisatoren, Pigmente, Entformungsmittel, Flammschutzmittel und Antistatika enthalten.

8. Verfahren zur Herstellung der Formmassen der Ansprüche 1 bis 7, dadurch gekennzeichnet, daß man die Komponenten A, B und C sowie gegebenenfalls Stabilisatoren, Pigmente, Entformungsmittel, Flammschutzmittel und/oder Antistatika in bekannter Weise vermischt und bei erhöhter Temperatur in

üblichen Vorrichtungen schmelzcompoundiert oder schmelzextrudiert.

9. Verwendung der Formmassen der Ansprüche 1 bis 7 zur Herstellung von Formkörpern.